# EUROPÄISCHE PATENTSCHRIFT

(11) **EP 3 183 793 B1**
(45) Veröffentlichungstag und Bekanntmachung des Hinweises auf die Patenterteilung: **15.04.2020**
(21) Anmeldenummer: 14761805.2
(22) Anmeldetag: 18.08.2014
(51) Int. Cl.: H02J 7/00

(54) **MODULARE INFRASTRUKTUREINRICHTUNG, INFRASTRUKTURSYSTEM UND VERFAHREN ZUM BETREIBEN EINER INFRASTRUKTUREINRICHTUNG**
MODULAR INFRASTRUCTURE DEVICE, INFRASTRUCTURE SYSTEM AND METHOD FOR OPERATING AN INFRASTRUCTURE DEVICE
DISPOSITIF D'INFRASTRUCTURE MODULAIRE, SYSTÈME D'INFRASTRUCTURE ET PROCÉDÉ PERMETTANT DE FAIRE FONCTIONNER UN DISPOSITIF D'INFRASTRUCTURE

(43) Veröffentlichungstag der Anmeldung: 28.06.2017
(73) Patentinhaber: Maurus, Tobias, 70197 Stuttgart (DE)
(72) Erfinder: Maurus, Tobias, 70197 Stuttgart (DE)
(74) Vertreter: Hoeger, Stellrecht & Partner Patentanwälte mbB
(86) Internationale Anmeldenummer: PCT/EP2014/067583
(87) Internationale Veröffentlichungsnummer: WO 2016/026513

(56) Entgegenhaltungen:
- CN-U- 203 308 123
- DE-A1- 4 213 414
- DE-A1-102008 052 827
- DE-A1-102011 056 651
- DE-A1-102012 015 192
- US-B1- 6 193 154

## Beschreibung

Die vorliegende Erfindung betrifft eine Infrastruktureinrichtung. Eine solche Infrastruktureinrichtung dient insbesondere der Versorgung von Personen oder Gegenständen mit Verbrauchsmitteln. Beispielsweise sind Tankstellen zur Versorgung von Fahrzeugen mit Kraftstoffen und/oder Strom als eine Infrastruktureinrichtung anzusehen.

DE 4213414 und DE 102008052827 offenbaren bekannte Infrastruktureinrichtungen.

Der vorliegenden Erfindung liegt die Aufgabe zugrunde, eine Infrastruktureinrichtung bereitzustellen, welche variabel aufgebaut und flexibel einsetzbar und erweiterbar ist.

Diese Aufgabe wird erfindungsgemäß durch eine Infrastruktureinrichtung gelöst, welche modular ausgebildet ist und mindestens eine Basiseinheit und eine oder mehrere Infrastruktureinheiten umfasst.

Die Erfindung ist durch die unabhängigen Ansprüche definiert.

Die eine oder die mehreren Infrastruktureinheiten dienen vorzugsweise zur Versorgung von Personen oder Gegenständen mit elektrischer Energie, Daten, Informationen, Lebensmitteln, Gebrauchsgegenständen und/oder Verbrauchsmitteln. Ferner kann vorgesehen sein, dass eine oder mehrere Infrastruktureinheiten der Aufbewahrung von Gegenständen dienen.

Die eine oder die mehreren Infrastruktureinheiten, insbesondere die gesamte modulare Infrastruktureinrichtung, ist vorzugsweise stationär ausgebildet und angeordnet.

Die Infrastruktureinrichtung ist vorzugsweise ein Anlaufpunkt oder Aufenthaltspunkt für Personen oder Gegenstände, an welchem die Versorgung mit elektrischer Energie, Daten, Informationen, Lebensmitteln, Gebrauchsgegenständen und/oder Verbrauchsmitteln erfolgt.

Die Basiseinheit umfasst insbesondere ein Gerüst oder ein Gestell zur Aufnahme und/oder Anordnung einer oder mehrerer Infrastruktureinheiten.

Ferner dient die Basiseinheit vorzugsweise der Aufnahme und/oder Anordnung einer oder mehrerer Energieversorgungseinheiten, insbesondere Eigenversorgungseinheiten, der Infrastruktureinrichtung.

Die Basiseinheit bildet vorzugsweise eine Überdachung oder zumindest teilweise oder vollständige Einhausung für eine oder mehrere Infrastruktureinheiten der Infrastruktureinrichtung.

Insbesondere kann vorgesehen sein, dass mittels der Basiseinheit ein Aufenthaltsbereich, insbesondere ein überdachter Aufenthaltsbereich, für Personen und/oder Gegenstände, beispielsweise Fahrzeuge, gebildet ist.

Eine oder mehrere Infrastruktureinheiten umfassen vorzugsweise eine Kommunikationseinheit, eine Informationseinheit, eine Aufbewahrungseinheit, eine Anzeigeeinheit und/oder eine Bereitstellungsvorrichtung.

Eine Bereitstellungsvorrichtung ist beispielsweise ein Verkaufsautomat zum Verkaufen von Lebensmitteln, insbesondere Speisen und/oder Getränken, oder Verbrauchsmitteln, insbesondere Schmierstoffe, Putzmittel, Frostschutzmittel, etc. für Fahrzeuge.

Eine Kommunikationseinheit ist beispielsweise eine Interaktionseinheit, mittels welcher eine Person mit der Infrastruktureinrichtung, insbesondere einer oder mehrerer Infrastruktureinheiten, interagieren kann.

Alternativ oder ergänzend hierzu kann vorgesehen sein, dass eine Kommunikationseinheit eine Vorrichtung ist, mittels welcher eine Person mit anderen Personen kommunizieren kann.

Eine Informationseinheit ist vorzugsweise eine Vorrichtung, mittels welcher Informationen für eine Person bereitstellbar, insbesondere anzeigbar, sind. Eine Informationseinheit kann beispielsweise ein Werbefeld oder eine Werbetafel oder ein Informationsdisplay sein.

Eine Aufbewahrungseinheit ist insbesondere ein Schließfach, in welchem Personen Gegenstände deponieren und sicher aufbewahren können.

Eine Anzeigeeinheit ist insbesondere eine Displayvorrichtung.

Mittels einer Anzeigeeinheit sind vorzugsweise Daten darstellbar, welche die Benutzung oder Handhabung einer oder mehrerer Infrastruktureinheiten der Infrastruktureinrichtung betreffen.

Mittels einer Anzeigeeinheit kann sich eine Person insbesondere über einen Zustand einer oder mehrerer Infrastruktureinheiten oder der gesamten Infrastruktureinrichtung informieren.

Bei einer Ausgestaltung der Erfindung kann vorgesehen sein, dass eine oder mehrere Infrastruktureinheiten eine oder mehrere Anschlussvorrichtungen zum Verbinden der einen oder mehreren Infrastruktureinheiten mit einer oder mehreren Nutzereinheiten umfassen.

Beispielsweise kann vorgesehen sein, dass eine oder mehrere Infrastruktureinheiten eine drahtlose oder drahtgebundene Anschlussvorrichtung umfassen, um eine Nutzereinheit beispielsweise mit Daten und/oder elektrischer Energie zu versorgen. Insbesondere kann hierdurch eine als Kraftfahrzeug ausgebildete Nutzereinheit mit elektrischer Energie und/oder mit flüssigem Kraftstoff versorgt werden.

Die Anschlussvorrichtung ermöglicht insbesondere eine elektrische Verbindung zwischen einer Infrastruktureinheit und einer Nutzereinheit.

Alternativ oder ergänzend hierzu kann vorgesehen sein, dass eine oder mehrere Anschlussvorrichtungen eine datentechnische und/oder fluidwirksame Verbindung zwischen einer oder mehrerer Infrastruktureinheiten und einer oder mehrerer Nutzereinheiten ermöglicht.

Mittels einer oder mehrerer Infrastruktureinheiten ist oder sind vorzugsweise elektrische Energie, Daten, Informationen, Lebensmittel, Gebrauchsgegenstände und/oder Verbrauchsmittel für eine oder mehrere Nutzereinheiten und/oder für eine oder mehrere Personen bereitstellbar.

Insbesondere kann vorgesehen sein, dass mittels einer oder mehrerer Infrastruktureinheiten elektrische Energie, Daten, Informationen, Lebensmittel, Gebrauchsgegenstände und/oder Verbrauchsmittel an eine oder mehrere Nutzereinheiten und/oder an eine oder mehrere Personen abgebbar ist oder sind.

Beispielsweise kann hierzu vorgesehen sein, dass eine oder mehrere Nutzereinheiten mittels einer oder mehrerer Anschlussvorrichtungen an eine oder mehrere Infrastruktureinheiten anschließbar sind, um beispielsweise elektrische Energie zu übertragen, einen Internetzugang oder einen sonstigen Kommunikationszugang zu ermöglichen oder sonstige Informationen und Daten zu übertragen.

Eine oder mehrere Nutzereinheiten können beispielsweise als Kraftfahrzeuge ausgebildet sein.

Ferner kann vorgesehen sein, dass eine oder mehrere Nutzereinheiten Smartphones oder sonstige portable Elektronikgeräte sind.

Eine oder mehrere Nutzereinheiten sind vorzugsweise mobile Einheiten.

Mittels der modularen Infrastruktureinrichtung wird vorzugsweise eine Infrastruktur zum Betrieb einer oder mehrerer Nutzereinheiten bereitgestellt. Günstig kann es sein, wenn die modulare Infrastruktureinrichtung eine oder mehrere Eigenversorgungseinheiten zur Erzeugung und/oder Bereitstellung von elektrischer Energie umfasst.

Eine Eigenversorgungseinheit ist insbesondere eine Photovoltaikeinheit, eine Windkrafteinheit und/oder eine Energiespeichervorrichtung.

Mittels einer Eigenversorgungseinheit ist insbesondere Energie zum Betrieb der modularen Infrastruktureinrichtung und/oder zur Versorgung von Gegenständen, insbesondere Nutzereinheiten, erzeugbar und/oder bereitstellbar.

Es kann vorgesehen sein, dass mindestens eine Basiseinheit mehrere vorbereitete Aufnahmen und/oder Befestigungsstellen zur Aufnahme und/oder Befestigung unterschiedlicher Arten von Infrastruktureinheiten umfasst. Unterschiedliche Infrastruktureinheiten können somit einfach an der Basiseinheit angeordnet und in Betrieb genommen werden. Insbesondere können auch Infrastruktureinheiten an einer bereits fertiggestellten modularen Infrastruktureinrichtung einfach nachgerüstet werden.

Es kann vorgesehen sein, dass die mindestens eine Basiseinheit der modularen Infrastruktureinrichtung selbst modular ausgebildet ist.

Die Basiseinheit ist dann insbesondere skalierbar und/oder erweiterbar.

Beispielsweise kann vorgesehen sein, dass eine Basiseinheit Tragelemente und ein oder mehrere Dachelemente umfasst, welche so ausgebildet sind, dass beispielsweise bereits bestehende Tragelemente Aufnahmen für weitere Dachelemente aufweisen, so dass eine einfache und beliebige Erweiterbarkeit der Basiseinheit gegeben ist.

Bei einer Ausgestaltung der Erfindung ist vorgesehen, dass die modulare Infrastruktureinrichtung eine Zentraleinheit umfasst, welche mit der einen oder den mehreren Infrastruktureinheiten, der einen oder den mehreren Nutzereinheiten und/oder der einen oder den mehreren Eigenversorgungseinheiten gekoppelt oder koppelbar ist.

Die Zentraleinheit ist vorzugsweise so ausgebildet und eingerichtet, dass ein Betrieb, eine Bedienung und/oder eine Benutzung der einen oder der mehreren Infrastruktureinheiten und/oder einer oder mehrerer Eigenversorgungseinheiten mittels der Zentraleinheit erfasst, gesteuert, geregelt und/oder an ein übergeordnetes Monitoringsystem gemeldet wird.

Vorzugsweise sind sämtliche Infrastruktureinheiten der Infrastruktureinrichtung so ausgebildet und eingerichtet, dass mittels der Zentraleinheit eine von einer Person oder einer Nutzereinheit in Anspruch genommene Infrastrukturleistung erfassbar ist. Ferner sind vorzugsweise Nutzerdaten und/oder Abrechnungsdaten erfassbar, um die in Anspruch genommene Infrastrukturleistung abrechnen zu können.

Beispielsweise kann eine Abrechnung über ein Bezahlsystem mit RFID, Münzeinwurf, Geldscheineinzug, Magnetkarte, Kreditkarte, Smartphoneanbindung (App) vorgesehen sein.

Die modulare Infrastruktureinrichtung eignet sich insbesondere zur Verwendung in einem Infrastruktursystem.

Die vorliegende Erfindung betrifft daher auch ein Infrastruktursystem, welches eine oder mehrere erfindungsgemäße modulare Infrastruktureinrichtungen umfasst.

Das Infrastruktursystem umfasst insbesondere ein übergeordnetes Monitoringsystem, mittels welchem mehrere Infrastruktureinrichtungen steuerbar und/oder regelbar und/oder überwachbar sind.

Das erfindungsgemäße Infrastruktursystem weist vorzugsweise einzelne oder mehrere der im Zusammenhang mit der erfindungsgemäßen modularen Infrastruktureinrichtung beschriebenen Merkmale und/oder Vorteile auf.

Die vorliegende Erfindung betrifft ferner ein Verfahren zum Betreiben einer oder mehrerer Infrastruktureinrichtungen. Der Erfindung liegt diesbezüglich die Aufgabe zugrunde, ein Verfahren bereitzustellen, mittels welchem eine oder mehrere Infrastruktureinrichtungen einfach und effizient betreibbar sind.

Diese Aufgabe wird erfindungsgemäß dadurch gelöst, dass das Verfahren zum Betreiben einer oder mehrerer Infrastruktureinrichtungen, insbesondere erfindungsgemäßer modularer Infrastruktureinrichtungen, Folgendes umfasst:
Bereitstellen einer oder mehrerer Infrastruktureinheiten einer Infrastruktureinrichtung zur Versorgung von Personen oder Gegenständen mit elektrischer Energie, Daten, Informationen, Lebensmitteln, Gebrauchsgegenständen und/oder Verbrauchsmitteln;
Erfassen, Steuern und/oder Regeln eines Betriebs, einer Bedienung und/oder einer Benutzung der einen oder der mehreren Infrastruktureinheiten mittels einer Zentraleinheit, insbesondere unter Nutzung von einer Person oder einer Nutzereinheit erhaltener Daten.

Das erfindungsgemäße Verfahren weist vorzugsweise einzelne oder mehrere der im Zusammenhang mit der erfindungsgemäßen modularen Infrastruktureinrichtung und/oder dem erfindungsgemäßen Infrastruktursystem beschriebenen Merkmale und/oder Vorteile auf.

Günstig kann es sein, wenn das Verfahren zum Betreiben einer oder mehrerer Infrastruktureinrichtungen auch ein Verfahren zum Betreiben eines Infrastruktursystems, insbesondere eines erfindungsgemäßen Infrastruktursystems, ist. Bei diesem Verfahren werden vorzugsweise mehrere Infrastruktureinrichtungen mittels einer übergeordneten Steuerung, insbesondere eines übergeordneten Monitoringsystems, gesteuert und/oder geregelt und/oder miteinander koordiniert und/oder ausgewertet, insbesondere mit Hinblick auf eine Energieeffizienz des gesamten Infrastruktursystems.

Eine oder mehrere Infrastruktureinheiten können vorzugsweise einzelne oder mehrere der nachfolgend beschriebenen Komponenten aufweisen: Elektroladesäule, Schließfach, Bildschirm, Lebensmittel-Verkaufsautomat, Kfz-Hilfsmittel-Verkaufsautomat, Geldautomat, Fahrkartenautomat, Kompressor, Luftdruckprüfgerät, Staubsauger, Beleuchtung, Zustandsanzeige, insbesondere LED-Zustandsbeleuchtung, Wireless LAN, Hot Spot (W-LAN oder Wifi Hot Spot), Überwachungskamera.

Eine oder mehrere Infrastruktureinheiten umfassen vorzugsweise eine Authentifizierungsvorrichtung zur Erfassung und/oder Kontrolle von Personendaten und/oder Nutzereinheitendaten.

Die modulare Infrastruktureinrichtung bietet vorzugsweise eine räumliche Integration einer Vielzahl von Komponenten für eine Vielzahl von Anwendungsmöglichkeiten und Aufstellungsorten.

Ein Stromnetzanschluss, eine Energieerzeugungsanlage und/oder Datenschnittstellen sind vorzugsweise für mehrere Personen und/oder mehrere Nutzereinheiten gemeinsam nutzbar.

Die erfindungsgemäße Infrastruktureinrichtung ist insbesondere modular erweiterbar.

Die Infrastruktureinrichtung dient vorzugsweise der wetterfesten Aufstellung und gleichzeitigen Versorgung von Funktionskomponenten im Freien mit Energie sowie der Bereitstellung eines breitbandigen Kommunikationsanschlusses.

Eine oder mehrere Infrastruktureinheiten können vorzugsweise ferner Energiespeichersysteme, informationstechnische Netzwerkkomponenten, bilddarstellende Geräte, Geräte der Mess-, Steuer- und/oder Regeltechnik, etc. enthalten.

Vorzugsweise sind eine oder mehrere Infrastruktureinheiten so ausgebildet und eingerichtet, dass diese ein automatisiertes Betriebsverhalten aufweisen und mit Personen (Anwendern oder Benutzern) in Interaktion treten können.

Vorzugsweise sind die Eigenversorgungseinheiten der erfindungsgemäßen Infrastrukturvorrichtung so dimensioniert, dass eine energieautarke Betriebsweise der Infrastruktureinrichtung möglich ist. Die Infrastruktureinrichtung kann dann insbesondere "off grid" betrieben werden. Ein Stromnetzanschluss ist dann vorzugsweise entbehrlich.

Die modulare Infrastruktureinrichtung eignet sich insbesondere als Ladestation für Elektromobile, wobei Personen, welche die Elektromobile nutzen, beispielsweise während eines Ladevorgangs weitere Infrastruktureinheiten der Infrastruktureinrichtung nutzen können, beispielsweise Funktionseinheiten, die den Bedarf des täglichen Lebens bedienen. Hierunter fallen insbesondere Schließfächer, Verkaufsautomaten, Lademöglichkeiten für portable Elektrogeräte oder Informationsbildschirme.

Die Basiseinheit und/oder eine oder mehrere Infrastruktureinheiten umfassen vorzugsweise ferner eine Sitzbank für Personen und einen oder mehrere Schlossbügel oder Schlossaufnahmepunkte zum Anbinden und sicheren Festmachen von Gegenständen, beispielsweise Fahrrädern.

Zudem kann vorgesehen sein, dass eine Basiseinheit und eine oder mehrere Infrastruktureinheiten einen Mülleimer, einen Aschenbecher, einen Wasseranschluss, einen Staubsauger und/oder ein Luftdruckprüfgerät umfassen.

Eine Infrastruktureinheit zur Aufbewahrung von Gegenständen kann beispielsweise als ein Schließfach ausgebildet sein. Ein solches Schließfach ist vorzugsweise so bemessen, dass jeweils ein Helm und eine Tasche oder ein Rucksack darin Platz finden. Ein Schließfach kann ferner beispielsweise mit einer Steckdose für Ladezwecke versehen sein oder eine Kühlfunktion aufweisen.

Günstig kann es sein, wenn jede Infrastruktureinheit eine Anzeigeeinheit umfasst, mittels welcher eine Person, insbesondere ein potentieller Benutzer, auf Anhieb einen Zustand, insbesondere eine Betriebsbereitschaft oder Benutzungsbereitschaft, der Infrastruktureinheit erkennen kann. Eine solche Anzeigeeinheit kann insbesondere eine LCD oder LED Anzeige mit Farbcodierung sein, wobei beispielsweise ein grünes Licht eine Funktionsbereitschaft und Nutzungsbereitschaft signalisiert, während beispielsweise ein oranges oder rotes Licht eine Störung oder eine bereits erfolgende Nutzung signalisiert.

Alternativ oder ergänzend hierzu kann für eine Infrastruktureinrichtung als Ganzes eine zentrale Anzeigeeinheit für mehrere, insbesondere sämtliche, Infrastruktureinheiten vorgesehen sein.

Eine Basiseinheit kann ferner beispielsweise eine Überdachung und/oder Einhausung für Einkaufswagen, Fahrräder und/oder Autos bilden.

Weitere bevorzugte Merkmale und/oder Vorteile der Erfindung sind Gegenstand der nachfolgenden Beschreibung und der zeichnerischen Darstellung von Ausführungsbeispielen.

In den Zeichnungen zeigen:
- Fig. 1: eine schematische perspektivische Darstellung einer ersten Ausführungsform einer modularen Infrastruktureinrichtung;
- Fig. 2: eine schematische Ansicht von vorne auf die modulare Infrastruktureinrichtung aus Fig. 1, wobei in gestrichelten Linien zusätzliche Infrastruktureinheiten der Infrastruktureinrichtung sowie eine Erweiterung einer Basiseinheit der Infrastruktureinrichtung dargestellt sind;
- Fig. 3: eine schematische Darstellung des elektrischen Aufbaus der Infrastruktureinrichtung;
- Fig. 4: eine schematische Darstellung des elektrischen Aufbaus einer Infrastruktureinheit der Infrastruktureinrichtung;
- Fig. 5: eine schematische Darstellung eines Monitoringsystems eines Infrastruktursystems, welches mehrere Infrastruktureinrichtungen umfasst; und
- Fig. 6: eine schematische perspektivische Darstellung einer Infrastruktureinrichtung, welche mit einer Vielzahl von Infrastruktureinheiten versehen ist.

Gleiche oder funktional äquivalente Elemente sind in sämtlichen Figuren mit denselben Bezugszeichen versehen.

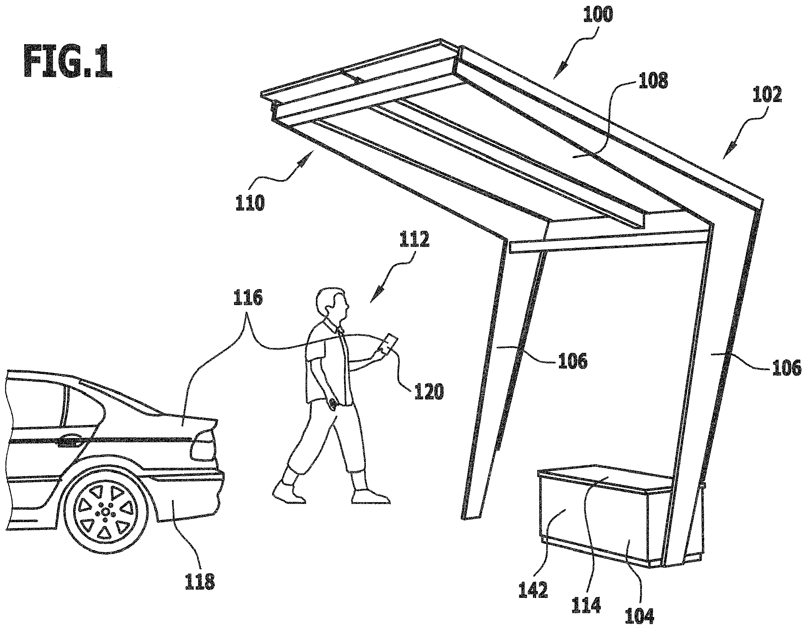

Eine in den Fig. 1 bis 4 dargestellte Ausführungsform einer als Ganzes mit 100 bezeichneten Infrastruktureinrichtung umfasst eine Basiseinheit 102 und eine oder mehrere Infrastruktureinheiten 104.

Die Basiseinheit 102 umfasst zwei oder mehr Tragelemente 106, welche ein oder mehrere Dachelemente 108 tragen.

Die Basiseinheit 102 umfasst somit insbesondere eine Überdachungseinheit 110, mittels welcher ein überdachter Bereich gebildet ist, in welchem sich beispielsweise Personen 112 aufhalten können, um sich beispielsweise vor Regen zu schützen.

Eine herkömmliche Infrastruktureinrichtung 100 bietet üblicherweise nicht mehr als einen Schutz vor unerwünschtem Niederschlag. Allenfalls kann noch eine Bank 114 vorgesehen sein, auf welcher sich eine Person 112 niederlassen kann.

Bei der in den Fig. 1 bis 4 dargestellten Ausführungsform einer Infrastruktureinrichtung 100 ist hingegen vorgesehen, dass die Infrastruktureinrichtung 100 eine Person 112 und/oder eine Nutzereinheit 116, beispielsweise ein Fahrzeug 118 und/oder ein Smartphone 120, mit elektrischer Energie, Daten, Informationen, Lebensmitteln, Gebrauchsgegenständen und/oder Verbrauchsmitteln versorgt.

Die Basiseinheit 102 dient hierzu der Aufnahme von vorzugsweise mehreren Infrastruktureinheiten 104 unterschiedlicher Art und Funktion.

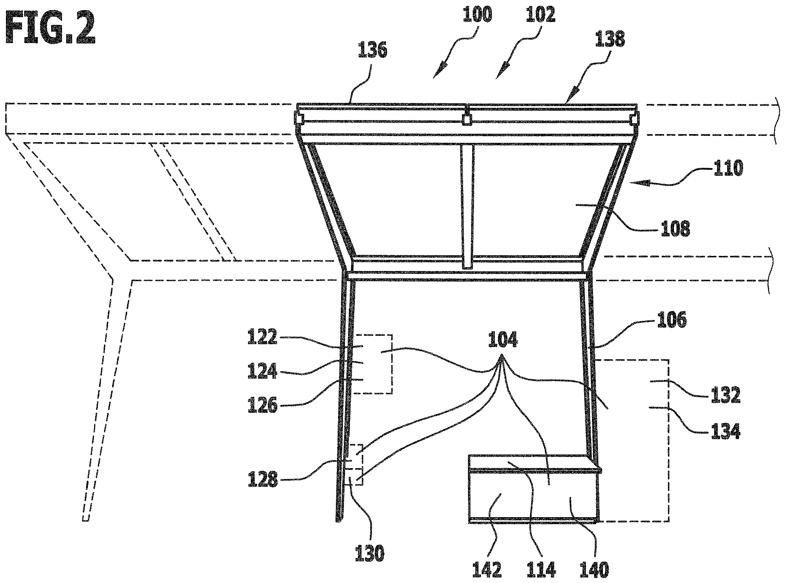

Wie insbesondere Fig. 2 zu entnehmen ist, können beispielsweise Infrastruktureinheiten 104 vorgesehen und an der Basiseinheit 102 angeordnet sein, welche Folgendes umfassen oder als Folgendes ausgebildet sind: eine Informationseinheit 122, eine Anzeigeeinheit 124, eine Kommunikationseinheit 126, eine Sender-/Empfängereinheit 128, einen Stromanschluss 130, eine Bereitstellungsvorrichtung 132, etc.

Mittels einer Informationseinheit 122 können Informationen für eine Person 112 bereitgestellt, insbesondere angezeigt, werden. Beispielsweise kann es sich bei diesen Informationen um Werbung, Nachrichten, Fahrpläne von Bussen oder Bahnen, etc. handeln.

Eine Anzeigeeinheit 124 dient insbesondere der Anzeige von Betriebszuständen und/oder Benutzungszuständen einzelner oder mehrerer Infrastruktureinheiten 104.

Mittels einer Kommunikationseinheit 126 kann eine Person 112 vorzugsweise mit einer oder mehreren Infrastruktureinheiten 104 interagieren.

Eine Sender-/Empfängereinheit 128 ist beispielsweise ebenfalls als eine Kommunikationseinheit 126 ausgebildet und dient beispielsweise der Bereitstellung eines drahtlosen Internetzugangs.

Ein Stromanschluss 130 dient insbesondere der Bereitstellung von elektrischer Energie, insbesondere zum Laden von portablen elektrischen Geräten und/oder Elektrofahrzeugen, beispielsweise elektrisch angetriebenen Personenkraftwagen oder Fahrrädern.

Eine Bereitstellungsvorrichtung 132 ist beispielsweise als ein Verkaufsautomat 134 ausgebildet. An einer Bereitstellungsvorrichtung 132 kann eine Person 112 beispielsweise Lebensmittel, insbesondere Speisen oder Getränke, oder sonstige Gegenstände, beispielsweise PKW-Verbrauchsmittel, erwerben.

Die Infrastruktureinrichtung 100 umfasst vorzugsweise eine oder mehrere Eigenversorgungseinheiten 136, beispielsweise eine oder mehrere Solarzelleneinheiten 138.

Mittels einer Eigenversorgungseinheit 136 kann insbesondere elektrische Energie durch Nutzung von Sonnenenergie und/oder Windenergie erzeugt werden. Diese elektrische Energie dient insbesondere dem Betrieb der Infrastruktureinrichtung 100, kann jedoch auch für Nutzereinheiten 116 bereitgestellt werden, insbesondere um Elektrofahrzeuge oder portable Elektrogeräte zu laden.

Mittels einer Speichervorrichtung 140 der Infrastruktureinrichtung 100 kann vorzugsweise elektrische Energie gespeichert werden. Insbesondere kann mittels der Speichervorrichtung 140 elektrische Energie, welche mittels der Eigenversorgungseinheit 136 erzeugt wird, gespeichert und zu einem späteren Zeitpunkt bereitgestellt werden.

Wie Fig. 2 ferner zu entnehmen ist, ist die Basiseinheit 102 der Infrastruktureinrichtung 100 selbst modular aufgebaut.

So kann beispielsweise durch die Ergänzung von nur einem weiteren Tragelement 106 mindestens ein weiteres Dachelement 108 angeordnet werden, um den Aufenthaltsbereich, insbesondere die Überdachungseinheit 110, für Personen 112 zu erweitern.

Die Infrastruktureinrichtung 100 umfasst vorzugsweise eine Zentraleinheit 142, mittels welcher mehrere Infrastruktureinheiten 104, insbesondere sämtliche Infrastruktureinheiten 104, steuerbar, regelbar und/oder miteinander koordinierbar sind.

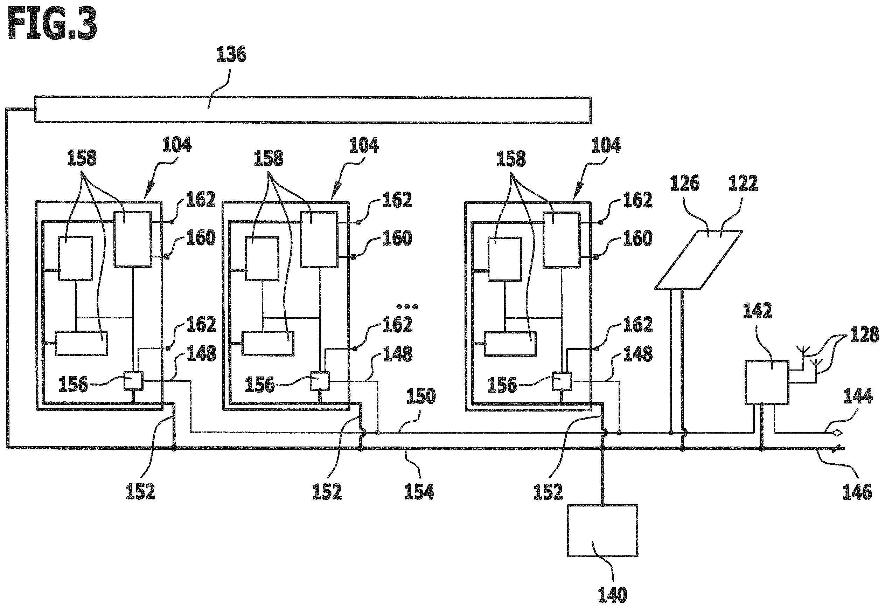

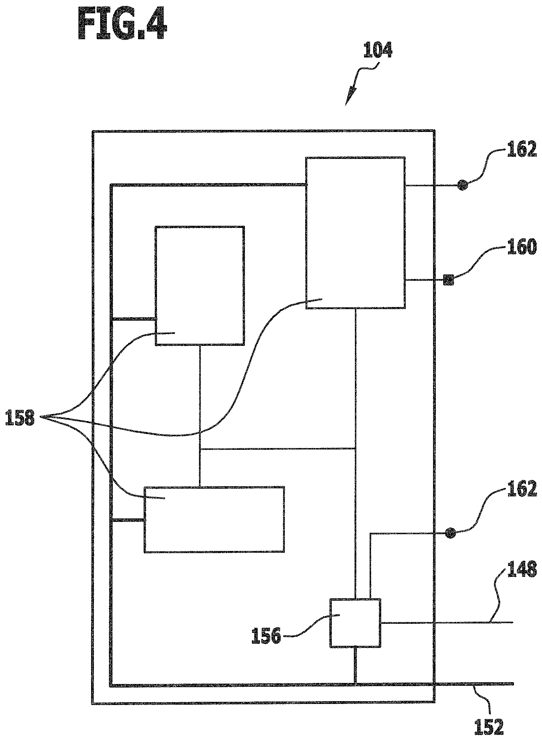

Wie insbesondere den Fig. 3 und 4 zu entnehmen ist, ist die Infrastruktureinrichtung 100 als Ganzes mittels eines Internetanschlusses 144 mit dem Internet verbunden.

Mittels eines Stromnetzanschlusses 146 ist die Infrastruktureinrichtung 100 als Ganzes mit dem Stromnetz, insbesondere dem öffentlichen Stromnetz oder einem Stromnetz eines separaten Energieversorgers, verbunden.

Über den Internetanschluss 144 und den Stromnetzanschluss 146 sind sämtliche Infrastruktureinheiten 104 der Infrastruktureinrichtung 100 bei Bedarf mit dem Internet verbindbar oder stetig mit dem Internet verbunden sowie bei Bedarf mit elektrischer Energie versorgbar oder konstant an das Stromnetz angeschlossen.

Jede Infrastruktureinheit 104 umfasst hierzu jeweils eine Datenverbindung 148 zur Anbindung an ein Datennetz 150 der Infrastruktureinrichtung 100 und eine elektrische Verbindung 152 zur Anbindung an ein Energienetz 154 der Infrastruktureinrichtung 100.

Über das Datennetz 150 sind sämtliche Infrastruktureinheiten 104 mit der Zentraleinheit 142, einer oder mehreren Kommunikationseinheiten 126, einer oder mehreren Informationseinheiten 122, einer oder mehreren Sender-/Empfängereinheiten 128 und/oder dem Internetanschluss 144 verbunden.

Über das Energienetz 154 sind sämtliche Infrastruktureinheiten 104 vorzugsweise mit einer oder mehreren Eigenversorgungseinheiten 136, mit einer oder mehreren Speichervorrichtungen 140 und/oder mit dem Stromnetzanschluss 146 verbunden.

Auch die Zentraleinheit 142 ist an das Energienetz 154 angeschlossen.

Wie insbesondere Fig. 4 zu entnehmen ist, umfasst eine Infrastruktureinheit 104 vorzugsweise ferner eine interne Kontrolleinheit 156, mittels welcher vorzugsweise die eigentlichen Funktionen der Infrastruktureinheit 104 durchführbar und kontrollierbar sind. Zudem sind für jede Infrastruktureinheit 104 eine oder mehrere Funktionskomponenten 158 zur Durchführung dieser eigentlichen Funktionen der Infrastruktureinheit 104 vorgesehen. Über einen oder mehrere Signalausgänge 160 kann vorzugsweise alternativ zur Datenverbindung 148 eine Interaktion mit weiteren Komponenten der Infrastruktureinrichtung 100 und oder mit einer Person 112 oder einer Nutzereinheit 116 vorgenommen werden.

Ein oder mehrere Sensoren 162 einer Infrastruktureinheit 104 dienen schließlich zur Erfassung von personenbezogenen Daten und/oder Funktionsdaten der Infrastruktureinheit 104, so dass insbesondere eine zuverlässige Funktion der Funktionskomponenten 158 gewährleistet werden kann.

Gemäß Fig. 3 sind beispielsweise drei Infrastruktureinheiten 104 zentral mittels der Zentraleinheit 142 ansteuerbar, insbesondere regelbar und/oder koordinierbar.

Eine übergeordnete Kommunikationseinheit 126 und/oder Informationseinheit 122 dient dabei vorzugsweise der Interaktion mit einer Person 112.

Die vorstehend beschriebene Infrastruktureinrichtung 100 wird wie folgt verwendet:
Beispielsweise an einer Kommunikationseinheit 126 bedient eine Person 112 eine oder mehrere Infrastruktureinheiten 104 der Infrastruktureinrichtung 100.

Die Person 112 gibt hierzu beispielsweise personenbezogene Daten und/oder Abrechnungsdaten über ein Eingabefeld der Kommunikationseinheit 126 ein, um Infrastrukturdienstleistungen der Infrastruktureinrichtung 100 in Anspruch nehmen zu können.

Beispielsweise kann die Person 112 Infrastrukturdienstleistungen kaufen.

Eine solche Infrastrukturdienstleistung ist beispielsweise die Bereitstellung von elektrischer Energie zum Laden eines Fahrzeugs 118 der Person 112.

Die Person 112 kann hierzu beispielsweise ein (nicht dargestelltes) Elektrokabel verwenden, um ein Fahrzeug 118 mit einer als Stromanschluss 130 ausgebildeten Infrastruktureinheit 104 zu verbinden. Über die Kommunikationseinheit 126 kann dann ein Ladevorgang des Fahrzeugs 118 initiiert werden.

Die zum Laden des Fahrzeugs 118 verwendete elektrische Energie wird beispielsweise über eine oder mehrere Eigenversorgungseinheiten 136 der Infrastruktureinrichtung 100 und/oder über den Stromnetzanschluss 146 bereitgestellt, gegebenenfalls auch zwischengespeichert über die Speichervorrichtung 140.

Während des Ladevorgangs kann die Person 112 weitere Infrastruktureinheiten 104 der Infrastruktureinrichtung 100 nutzen. Beispielsweise kann die Person 112 an einem Verkaufsautomat 134 ein Getränk erwerben oder sich mit dem eigenen Smartphone 120 über eine Sender-/Empfängereinheit 128 der Infrastruktureinrichtung 100 mit dem Internet verbinden.

Die in den Fig. 1 bis 4 dargestellte Infrastruktureinrichtung 100 kann beispielsweise Bestandteil eines Infrastruktursystems 164 sein.

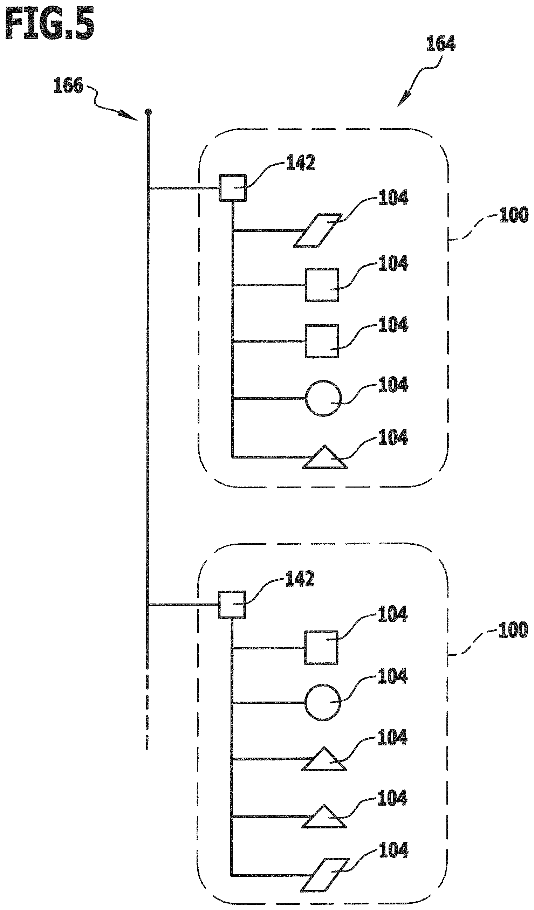

Wie insbesondere Fig. 5 zu entnehmen ist, umfasst ein solches Infrastruktursystem 164 vorzugsweise mehrere Infrastruktureinrichtungen 100, welche wiederum jeweils mehrere Infrastruktureinheiten 104 umfassen.

Mittels eines Monitoringsystems 166 des Infrastruktursystems 164 können vorzugsweise die Zentraleinheiten 142 einer jeden Infrastruktureinrichtung 100 gesteuert und/oder geregelt werden, um letztlich über ein zentrales System, nämlich das Monitoringsystem 166, sämtliche Infrastruktureinrichtungen 100 überwachen zu können.

Diese Überwachung dient einerseits der Kontrolle, ob die Infrastruktureinrichtungen 100 fehlerfrei funktionieren. Andererseits kann über das Monitoringsystem 166 beispielsweise auch eine zentrale Nutzerverwaltung realisiert werden, so dass Personen 112 einfach und ohne komplizierte und aufwändige Eingabe der Benutzerdaten an sämtlichen Infrastruktureinrichtungen 100 komfortabel auf die Infrastrukturdienstleistungen zugreifen können.

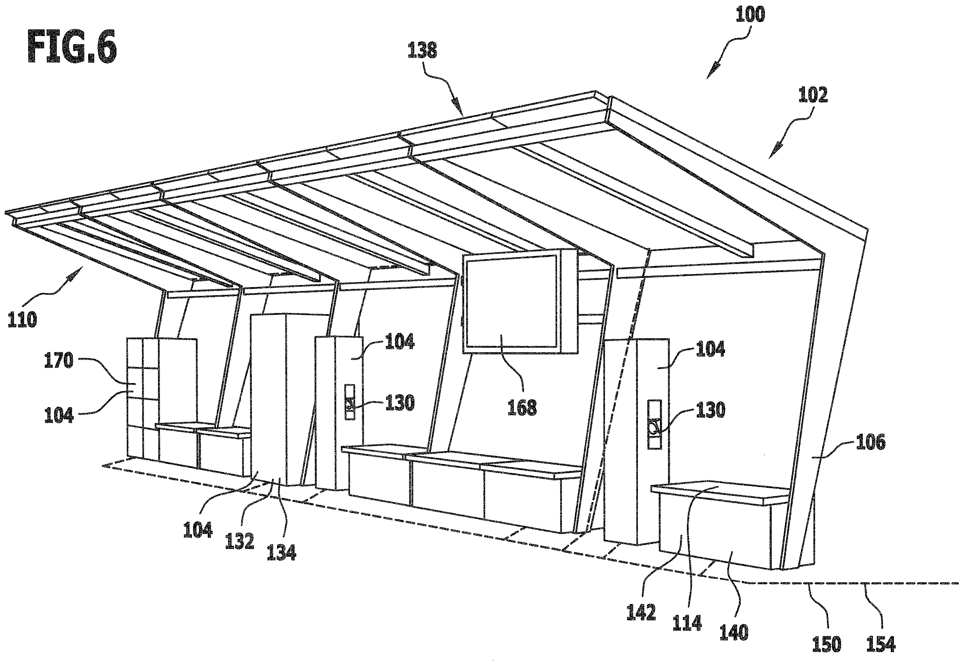

Fig. 6 zeigt schließlich noch eine konkrete Ausführungsform einer Infrastruktureinrichtung 100, bei welcher die Dachelemente 108 vollständig mit Solarzelleneinheiten 138 versehen sind, um eine möglichst große Menge elektrischer Energie bereitstellen zu können.

Diese elektrische Energie ist beispielsweise über zwei als Ladesäulen (Stromanschlüsse 130) ausgebildete Infrastruktureinheiten 104 bereitstellbar, insbesondere an Fahrzeuge 118 abgebbar.

Ferner umfasst die in Fig. 6 dargestellte Infrastruktureinrichtung 100 ein zentrales Display 168, welches als Kommunikationseinheit 126, als Anzeigeeinheit 124 und vor allem als Informationseinheit 122 dient.

Ein Verkaufsautomat 134 und mehrere als Schließfächer 170 ausgebildete Infrastruktureinheiten 104 bieten weitere Infrastrukturdienstleistungen für die Benutzer (Personen 112) der Infrastruktureinrichtung 100.

### Bezugszeichenliste

- 100: Infrastruktureinrichtung
- 102: Basiseinheit
- 104: Infrastruktureinheit
- 106: Tragelement
- 108: Dachelement
- 110: Überdachungseinheit
- 112: Person
- 114: Bank
- 116: Nutzereinheit
- 118: Fahrzeug
- 120: Smartphone
- 122: Informationseinheit
- 124: Anzeigeeinheit
- 126: Kommunikationseinheit
- 128: Sender-/Empfängereinheit
- 130: Stromanschluss
- 132: Bereitstellungsvorrichtung
- 134: Verkaufsautomat
- 136: Eigenversorgungseinheit
- 138: Solarzelleneinheit
- 140: Speichervorrichtung
- 142: Zentraleinheit
- 144: Internetanschluss
- 146: Stromnetzanschluss
- 148: Datenverbindung
- 150: Datennetz
- 152: elektrische Verbindung
- 154: Energienetz
- 156: Kontrolleinheit
- 158: Funktionskomponente
- 160: Signalausgang
- 162: Sensor
- 164: Infrastruktursystem
- 166: Monitoringsystem
- 168: Display
- 170: Schließfach

## Patentansprüche

1. Modulare Infrastruktureinrichtung (100), umfassend:
- mindestens eine Basiseinheit (102), welche zwei oder mehr Tragelemente (106) umfasst, die ein oder mehrere Dachelemente (108) tragen, so dass die Basiseinheit (102) eine Überdachungseinheit (110) umfasst, mittels welcher ein überdachter Bereich gebildet ist;
- mehrere Infrastruktureinheiten (104), welche eine Elektroladesäule umfassen;
- eine oder mehrere Infrastruktureinheiten (104), welche Funktionseinheiten sind, die den Bedarf des täglichen Lebens bedienen, wobei mittels einer oder mehrerer Infrastruktureinheiten (104) elektrische Energie, Daten, Informationen, Lebensmittel, Gebrauchsgegenstände und/oder Verbrauchsmittel für eine oder mehrere Nutzereinheiten (116) und/oder eine oder mehrere Personen (112) bereitstellbar ist/sind, insbesondere an eine oder mehrere Nutzereinheiten (116) und/oder eine oder mehrere Personen (112) abgebbar ist/sind;
- eine oder mehrere Elgenversorgungseinheiten (136) zur Erzeugung und/oder Bereitstellung von elektrischer Energie, wobei die Basiseinheit (102) der Aufnahme und/oder Anordnung einer oder mehrerer Eigenversorgungseinheiten (136) dient, welche als Solarzelleneinheiten (138) ausgebildet sind, wobei die Dachelemente (108) vollständig mit Solarzelleneinheiten (138) versehen sind;
- eine Zentraleinheit (142), welche mit den mehreren Infrastruktureinheiten (104) und der einen oder den mehreren Eigenversorgungseinheiten (136) gekoppelt Ist und welche mit der einen oder den mehreren Nutzereinheiten (116) gekoppelt oder koppelbar ist, wobei die Zentraleinheit (142) so ausgebildet und eingerichtet ist, dass ein Betrieb, eine Bedienung und eine Benutzung der Infrastruktureinheiten (104) und der einen oder der mehreren Elgenversorgungseinhelten (136) mittels der Zentraleinheit (142) erfasst, gesteuert, geregelt und/oder an ein übergeordnetes Monitoringsystem (166) gemeldet wird;
- wobei die Infrastruktureinheiten (104) so ausgebildet und eingerichtet sind, dass mittels der Zentraleinheit (142) eine von einer Person oder einer Nutzereinheit (116) in Anspruch genommene Infrastrukturdienstleistung erfasst wird;
- ein Bezahlsystem mit RFID, Münzeinwurf, Geldscheineinzug, Magnetkarte, Kreditkarte und/oder Smartphoneanbindung (App) zur Abrechnung von in Anspruch genommenen Infrastrukturdienstleistungen.

2. Modulare Infrastruktureinrichtung (100) nach Anspruch 1, **dadurch gekennzeichnet, dass** eine oder mehrere Infrastruktureinheiten (104) eine Kommunikationseinheit (126), eine Informationseinheit (122), eine Aufbewahrungseinheit (170), eine Anzeigeeinheit (124) und/oder eine Bereitstellungsvorrichtung (132), Insbesondere einen Verkaufsautomaten (134), umfassen.

3. Modulare Infrastruktureinrichtung (100) nach einem der Ansprüche 1 oder 2, **dadurch gekennzeichnet, dass** eine oder mehrere Nutzereinheiten (116) mobile Einheiten, beispielsweise elektrische Fahrzeuge (118), Smartphones (120), etc., sind.

4. Modulare Infrastruktureinrichtung (100) nach einem der Ansprüche 1 bis 3, **dadurch gekennzeichnet, dass** die mindestens eine Basiseinheit (102) selbst modular ausgebildet ist.

5. Infrastruktursystem (164), umfassend eine oder mehrere modulare Infrastruktureinrichtungen (100) nach einem der Ansprüche 1 bis 4.

6. Verfahren zum Betreiben einer oder mehrerer Infrastruktureinrichtungen (100) nach einem der Ansprüche 1 bis 4, Insbesondere zum Betreiben eines Infrastruktursystems (164) nach Anspruch 5, wobei das Verfahren Folgendes umfasst:
- Bereitstellen einer oder mehrerer Infrastruktureinheiten (104) zur Versorgung von Personen (112) oder Gegenständen (118, 120) mit elektrischer Energie, Daten, Informationen, Lebensmitteln, Gebrauchsgegenständen und/oder Verbrauchsmitteln;
- Erfassen, Steuern und/oder Regeln eines Betriebs, einer Bedienung und/oder einer Benutzung der einen oder der mehreren Infrastruktureinheiten (104) mittels einer Zentraleinheit (142), insbesondere unter Nutzung von einer Person (112) oder einer Nutzereinheit (116) erhaltener Daten.

## Claims

1. Modular infrastructure device (100), comprising:
- at least one base unit (102), comprising two or more supporting elements (106) which support one or more roof elements (108) in such a way that the base unit (102) comprises a roofing unit (110) by means of which a roofed area is formed;
- multiple infrastructure units (104) which comprise a charging pillar;
- one or more infrastructure units (104) which are functional units that serve everyday needs, wherein electrical energy, data, information, food products, commodities and/or consumables can be provided for one or more user units (116) and/or for one or more persons (112) by means of one or more infrastructure units (104), in particular can be dispensed to one or more user units (116) and/or to one or more persons (112);
- one or more independent supply units (136) for generating and/or providing electrical energy, wherein the base unit (102) serves to accommodate and/or arrange one or more independent supply units (136) which are embodied as solar cell units (138), wherein the roof elements (108) are provided completely with solar cell units (138);
- a central unit (142) which is coupled to the multiple infrastructure units (104) and the one or more independent supply units (136) and which is coupled or couplable to the one or more user units (116), wherein the central unit (142) is embodied and configured in such a way that operation, operator control and use of the multiple infrastructure units (104) and the one or more independent supply units (136) are detected, open-loop controlled, closed-loop controlled and/or signaled to a superordinate monitoring system (166) by means of the central unit (142);
- wherein the infrastructure units (104) are embodied and configured in such a way that an infrastructure service which is made use of by a person or a user unit (116) is detectable by means of the central unit (142);
- a payment system payment system with RFID, insertion of coins, insertion of bank notes, magnetic card, credit card, smartphone connection (App) for billing the infrastructure service which is made use of.

2. Modular infrastructure device (100) according to claim 1, **characterized in that** one or more infrastructure units (104) comprise a communication unit (126), an information unit (122), a storage unit (170), a display unit (124) and/or a provision device (132), in particular a vending machine (134).

3. Modular infrastructure device (100) according to claim 1 or 2, **characterized in that** one or more user units (116) are mobile units, for example electrical vehicles (118), smartphones (120), etc.

4. Modular infrastructure device (100) according to one of claims 1 to 3, **characterized in that** the at least one base unit (102) is itself of modular design.

5. Infrastructure system (164), comprising one or more modular infrastructure devices (100) according to one of claims 1 to 4.

6. Method for operating one or more infrastructure devices (100) according to one of claims 1 to 4, in particular for operating an infrastructure system (164) according to claim 5, wherein the method comprises the following:
- Providing one or more infrastructure units (104) for supplying persons (112) or objects (118, 120) with electrical energy, data, information, food products, commodities and/or consumables;
- Detecting, open-loop and/or closed-loop controlling operation, operator control and/or use of one or more infrastructure units (104) by means of a central unit (142), in particular using data received from a person (112) or a user unit (116).

## Revendications

1. Dispositif d'infrastructure modulaire (100), comprenant :
- au moins une unité de base (102), laquelle comprend deux éléments support (106) ou plus, qui supportent un ou plusieurs éléments de toit (108), de sorte que l'unité de base (102) comprend une unité de couverture (110), au moyen de laquelle une zone couverte est formée ;
- plusieurs unités d'infrastructure (104), lesquelles comprennent une borne de recharge électrique ;
- une ou plusieurs unités d'infrastructure (104), lesquelles sont des unités fonctionnelles, qui répondent aux besoins de la vie quotidienne, dans lequel de l'énergie électrique, des données, des informations, des denrées alimentaires, des objets utilitaires et/ou des consommables peut/peuvent être mis à disposition pour une ou plusieurs unités utilisateur (116) et/ou une ou plusieurs personnes (112) au moyen d'une ou plusieurs unités d'infrastructure (104), en particulier peut/peuvent être transmis à une ou plusieurs unités utilisateur (116) et/ou à une ou plusieurs personnes (112) ;
- une ou plusieurs unités d'approvisionnement propre (136) pour la production et/ou la mise à disposition d'énergie électrique, dans lequel l'unité de base (102) sert à la réception et/ou à l'agencement d'une ou plusieurs unités d'approvisionnement propre (136), lesquelles sont réalisées en tant qu'unités de cellules solaires (138), dans lequel les éléments de toit (108) sont entièrement dotés d'unités de cellules solaires (138) ;
- une unité centrale (142), laquelle est couplée avec les plusieurs unités d'infrastructure (104) et l'une ou les plusieurs unités d'approvisionnement propre (136) et laquelle est couplée ou peut être couplée avec l'une ou les plusieurs unités utilisateur (116), dans lequel l'unité centrale (142) est réalisée et aménagée de sorte qu'un fonctionnement, une commande et une utilisation des unités d'infrastructure (104) et de l'une ou des plusieurs unités d'approvisionnement propre (136) est détecté, piloté, régulé au moyen de l'unité centrale (142) et/ou est signalé à un système de surveillance supérieur (166) ;
- dans lequel les unités d'infrastructure (104) sont réalisées et aménagées de sorte qu'un service d'infrastructure utilisé par une personne ou une unité utilisateur (116) est détecté au moyen de l'unité centrale (142) ;
- un système de paiement avec RFID, insertion de pièces de monnaie, introduction de billets de banque, carte magnétique, carte de crédit et/ou connexion smartphone (application) pour la facturation des services d'infrastructure utilisés.

2. Dispositif d'infrastructure modulaire (100) selon la revendication 1, **caractérisé en ce qu'**une ou plusieurs unités d'infrastructure (104) comprennent une unité de communication (126), une unité d'information (122), une unité de stockage (170), une unité d'affichage (124) et/ou un dispositif de mise à disposition (132), en particulier un distributeur automatique (134).

3. Dispositif d'infrastructure modulaire (100) selon l'une quelconque des revendications 1 et 2, **caractérisé en ce qu'**une ou plusieurs unités utilisateur (116) sont des unités mobiles, par exemple des véhicules électriques (118), des smartphones (120), etc.

4. Dispositif d'infrastructure modulaire (100) selon l'une quelconque des revendications 1 à 3, **caractérisé en ce que** l'au moins une unité de base (102) est réalisée elle-même de manière modulaire.

5. Système d'infrastructure (164), comprenant un ou plusieurs dispositifs d'infrastructure modulaires (100) selon l'une quelconque des revendications 1 à 4.

6. Procédé permettant de faire fonctionner un ou plusieurs dispositifs d'infrastructure modulaires (100) selon l'une quelconque des revendications 1 à 4, en particulier de faire fonctionner un système d'infrastructure (164) selon la revendication 5, dans lequel le procédé comprend ce qui suit :
- la mise à disposition d'une ou plusieurs unités d'infrastructure (104) pour approvisionner des personnes (112) ou objets (118, 120) en énergie électrique, données, informations, denrées alimentaires, objets utilitaires et/ou consommables ;
- la détection, le pilotage et/ou la régulation d'un fonctionnement, d'une commande et/ou d'une utilisation de l'une ou des plusieurs unités d'infrastructure (104) au moyen d'une unité centrale (142), en particulier en utilisant des données obtenues d'une personne (112) ou d'une unité utilisateur (116).
